# EUROPEAN PATENT APPLICATION

(11) **EP 1 868 085 A1**
(43) Date of publication of application: **19.12.2007**
(21) Application number: 06076764.7
(22) Date of filing: 22.09.2006
(51) Int. Cl.: G06F 9/445

(54) **Computer system with RFID interface**

(30) Priority: 13.06.2006 EP 06076219
(71) Applicant: Nederlandse Organisatie voor Toegepast-Natuurwetenschappelijk Onderzoek TNO, 2628 VK Delft (NL)
(72) Inventor: Vonder, Matthijs Raymond, 9731 LW Groningen (NL); Van der Waaij, Bram Dirk, 9728 TJ Groningen (NL); Helmholt, Kristian Alexander, 9731 HJ Groningen (NL); Langius, Erik Alle Fokko, 9714 BA Groningen (NL); van der Veen, Jan Sipke, 9711 PP Groningen (NL)
(74) Representative: van Loon, C.J.J.

(57) **Abstract**

Computer system, comprising control and/or processing means and an RFID interface that is suitable for reading out data which are stored in an RFID tag. A runtime module is arranged to examine whether the data stored in the RFID tag comprises instructions which are executable and to run those instructions by the control and/or processing means of the computer system. The computer system is for example an embedded computer system and the instructions may relate to e.g. settings or configuration of the computer system itself and/or of a system or network connected with the computer system. The RFID tag can be permanently or temporarily inserted in a mobile terminal such as a PDA, and the instructions in the RFID tag can be entered by means of a user interface such as the keyboard of the mobile terminal.

## Description

The invention concerns a computer system, comprising control and/or processing means and comprising or connected with an RFID interface that is suitable for reading out data which are stored in an RFID tag.

Radio frequency identification (RFID) is a method of storage and remote reading of information of so-called RFID "tags" that are on or in objects. These tags can be "active" or "passive". Active RFID-tags mostly run on batteries and can be read and written with a "remote transceiver" that sends and receives radio waves with an aerial. Passive RFID tags send a reply by converting the energy of the radio waves. These one can only be read and have a smaller memory. The memory is mostly used for storing a globally unique random identifier (GUID).

There exist RFID tags on which a certain number of characters can be written, which then can be read out from the RFID tags. These are used for example in order to store production data (production date, time, batch number, material, etc.) of a product.

RFID interfaces can be linked to for example a computer system such as a PC system. The configuration of such a computer systems mostly happens through a common interface such as a keyboard, mouse or monitor, reading of a configuration file, etc.

Today there are embedded systems to which a reader can be linked up. An embedded system is an electronic system (hardware and software) that may be integrated in consumer items or devices, with the aim to provide those with a certain form of intelligent behaviour. In general, an embedded system often consists of a sensor part that observes a "surrounding area", a communication part that forwards the observed information to an information processing part (controller, processor, software), and an actuator part that controls the behaviour of the surrounding area (in which the system has been built in) on the basis of the decisions taken by the information processing part.

There are also embedded systems in which a reader has been built in. Alteration of the configuration of the embedded system mostly happens through linking to a PC. The link is for example a serial communication port such as RS232 or RS-485 or is realized by the sending SMS messages, if the controller is equipped for that purpose.

There exist smartphones, PDAs and telephones that comprise an RFID interface and that can also pose as an RFID tag.

There exist also RFID tags with a built-in CPU, memory and sensor (for example thermometer). These RFID tags can be programmed to measure and record a certain value with the sensors at regular times, in order to read them out later again.

An important characteristic of many embedded systems is that they often have restricted possibilities for data input. The alteration of settings (also called configuration) must mostly be done by making a connection to a PC or by sending SMS messages. Few embedded systems have a built-in GSM modem (with SIM). The (re)configuring of an embedded system is therefore often time-consuming and requires a certain technical knowledge of the users.

The current invention aim to overcome this problem by providing a computer system, comprising control and/or processing means and comprising, or connected with, an RFID interface that is fit for reading out data which are stored in an RFID tag, which control and/or processing means comprise a runtime module that is arranged to examine whether the data stored in the RFID tag or at least part of them, comprises instructions which are executable by means of the runtime module, and to run those instructions by the control and/or processing means of the computer system.

In particular - however certainly not exclusively - situations are envisaged of in which the computer system is an embedded computer system.

Said instructions can relate to settings of the configuration of the computer system itself; these instructions can however also relate to settings of the configuration of the system of network connected with the computer system. For example the instructions relate to a network address, for example the IP address - of the computer system.

If the RFID interface is arranged not only for reading out but also for storage of data from the computer system, data relating to the settings of the configuration of the computer system itself can be transmitted to and stored in the RFID tag, in which the RFID tag thus can be used for back-up purposes.

Said instructions may be simple, however also relate to a series of instructions for the configuring of that computer system and possibly of further computer systems with an RFID interface, as a result of which an RFID tag can be used to configure various (embedded) computer systems one by one.

The RFID tag can permanently or temporarily be embedded in a mobile terminal such as a PDA or mobile telecommunication or multimedia terminal and said executable instructions in the RFID tag by means of the runtime module can be entered by means of a user interface, such as keyboard, belonging to (or considered to belong to) the mobile terminal.

The computer system can be deployed for the controlling of the process, which process is controlled by means of said instructions. For example the process is a preparation process, for example of a meal, with the help of a computer-controlled preparation device, such as a microwave/oven. Another domestic use is that in which the (embedded) computer system controls for example a washing machine and the washing program can for example be controlled by means of RFID tags that are imbedded (stitched) in the clothing to be washed and that comprise instructions ("washing instructions") about the correct treatment method of the clothing.

In other words, it is proposed to configure an embedded system (comprising or connected with an RFID interface) by means of one or more RFID tags that comprise commands which are arranged to for configure the system. The relevant tags can comprise various commands, such as commands for turning on or off of the logging of data. After the RFID is presented to the RFID interface, the embedded system takes over the relevant settings.

Preferably, the instructions will have the form of instruction lines, written in a high-level computer language, e.g. JAVA, which, by means of an "interpreter", loaded in the computer system and which is part of a runtime module, translates and runs the program about simultaneously: the interpreter translates one program line into machine language, executes it and steps to next line, etc. This differs from regular executable programs that are loaded in the computer as binary-coded instructions, so-called executables.

Interpreted programs run slower than similar compiled executables. Whereas a compiler program translates the whole program before running it, interpreters translate always one line when the program is executed. It is, however, very easy to write such a program, as each single code line can be tested interactively. Some languages (for example JIT compilers) are able both to be interpreted and to be compiled; such programs can be developed with the interpreter for convenience's sake w.r.t. testing and debugging, and compiled later on for production use. Interpreted programs must always be executed with the interpreter program, normally called runtime module. In order to run for example a BASIC or JAVA program there must always be a BASIC or JAVA interpreter active.

Summarizing: the behaviour of an embedded system can be altered by configuring it by means of RFID tags containing data/commands. Tags can be written for the configuration of devices, instead of only for identification purposes. A tag on which information can be written, now can be used to store, to transport and to run configuration commands by an embedded system having an RFID interface.

### Examples:

- changing the name and/or IP address of an embedded system.
- increasing the sample frequency of a measuring system; e.g. from 1 time a day to 10 times a day (see also the relevant tags in figure B).

Instead of one single action, a complete series of actions for the configuration of an embedded system can be written on an RFID tag. This is illustrated in figure C.

Through the suggested method an increase of efficiency can be realized. For each device, that must be configured in one same way, can be configured with the help of one same tag. If later on the same configuration is needed at another or a replacing controller, then the tag for the controller with the standard factory settings can be kept. Subsequently, the desired configuration is read from the tag and the controller configured.

The invention also provides the possibility for devices such as PDAs or smartphones to interact dynamically with a controller. For example, key-strokes at the PDA may be transmitted, via the wireless RFID communication channel, to the controller. The PDA stores the key-strokes into the RFID tag in the PDA. Then the controller with RFID interface reads these data and uses them. This could be compared with a BlueTooth keyboard for a PC. Advantage, however, of this mechanism is that there is no need for all kinds of different pre-programmed tags.

A tag can also comprise information for the benefit of for example a preparation method. For example a freezer meal with such an RFID tag can comprise the correct parameters for the microwave, for example 10 minutes defrosting at 100 Watt and 5 minutes heating at 600 Watt. In that way a microwave having an RFID interface can simply be programmed by a meal with an RFID tag containing the preparation instructions, by which - via the RFID interface - the meal can thus be prepared in the most optimal way.

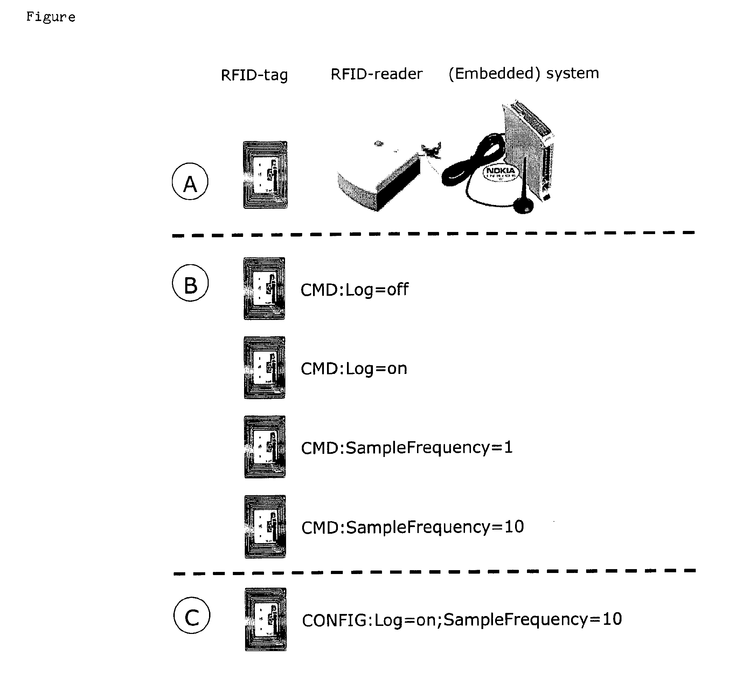

## Claims

1. Computer system, comprising control and/or processing means and comprising, or connected with, an RFID interface that is suitable for reading out data stored in an RFID tag, which control and/or processing means comprise a runtime module that is arranged to examine whether the data stored in the RFID tag, or at least part of them, comprises instructions which are executable by means of the runtime module and to run those instructions by the control and/or processing means of the computer system.

2. Computer system according to claim 1 or 2, wherein the computer system is an embedded computer system.

3. Computer system according to claim 1, wherein said instructions relate to settings or the configuration of the computer system itself.

4. Computer system according to claim 1, wherein said instructions relate to settings or the configuration of a system or a network which is connected with the computer system.

5. Computer system according to claim 2 or 3, wherein said instructions relate to a network address of the computer system.

6. Computer system according to claim 2, wherein the RFID interface is furthermore suitable for the storage of data from the computer system, and wherein data relevant for the settings or the configuration of the computer system itself are transmitted to and stored in the RFID tag.

7. Computer system according to claim 1, wherein said instruction relate to a series of instructions for configuring that computer system and further computer systems with an RFID interface.

8. Computer system according to claim 1, wherein the RFID tag is permanently or temporarily inserted in a mobile terminal such as a PDA or mobile telecommunication or multimedia terminal, and said instructions in the RFID tag, executable by means of the runtime module, are entered by means of a user interface, such as keyboard, belonging or considered to belong to the mobile terminal.

9. Computer system according to claim 1, arranged to control a process, which process is controlled by means of said instructions.

10. Computer system according to claim 9, which process is an operating process for a computer-controlled device, e.g. for preparation of a meal or washing clothes, equipped with an RFID tag comprising the relevant operating instructions.
